# EUROPÄISCHE PATENTSCHRIFT

(11) **EP 1 062 113 B1**
(45) Veröffentlichungstag und Bekanntmachung des Hinweises auf die Patenterteilung: **06.10.2004**
(21) Anmeldenummer: 99910278.3
(22) Anmeldetag: 25.02.1999
(51) Int. Cl.: B60K 35/00, H02G 11/02, G01D 13/28

(54) **ZEIGERINSTRUMENT**
POINTER INSTRUMENT
INSTRUMENT A AIGUILLE

(30) Priorität: 13.03.1998 DE 19810854
(43) Veröffentlichungstag der Anmeldung: 27.12.2000
(73) Patentinhaber: Siemens Aktiengesellschaft, 80333 München (DE)
(72) Erfinder: NOLL, Heinrich, D-64823 Gro -Umstadt (DE); JANSA, Frank, D-60385 Frankfurt (DE); OLBRICH, Helmut, D-64287 Darmstadt (DE); VOGEL, Michael, D-60437 Frankfurt (DE)
(86) Internationale Anmeldenummer: PCT/EP1999/001207
(87) Internationale Veröffentlichungsnummer: WO 1999/047376

(56) Entgegenhaltungen:
- DE-A- 3 837 295
- DE-A- 4 341 783
- DE-A- 19 534 020
- DE-A- 19 537 346

## Beschreibung

Die Erfindung betrifft ein Zeigerinstrument, insbesondere für ein Kraftfahrzeug, mit einem Zeiger mit einer eine Zeigerfahne auslenkenden Zeigerwelle und mit einer drehfest mit dem Zeiger verbundenen Lichtquelle, wobei die Lichtquelle mittels einer flexiblen, mit Leiterbahnen versehenen Folie mit einer Stromversorgung verbunden ist.

Aus der DE 43 41 783 A1 ist eine Vorrichtung zur Kontaktierung eines, in seinem Inneren mindestens eine Lichtquelle aufweisenden Zeigers mit einer die Stromzufuhr realisierenden Einrichtung, welche eine Stromübertragungseinrichtung aufweist, an welcher mindestens ein Kontaktstift zur Stromversorgung des Zeigers befestigt ist, bekannt. Die Stromübertragungseinrichtung ist an einem Gehäuseoberteil angeordnet, welches drehbar zu einem Gehäuseunterteil gelagert ist. Senkrecht zur Drehachse sind eine obere und eine untere Spiralfeder am Gehäuseoberteil mit einem Abstand angeordnet, die durch eine isolierende Trennplatte elektrisch getrennt sind.

Ein solches Zeigerinstrument, bei dem zusätzlich die Lichtquelle in einem oberen Abschnitt der Zeigerwelle angeordnet ist und Licht unmittelbar in die Zeigerfahne einstrahlt, wird heute vor allem in der Fahrzeugindustrie vielfach eingesetzt und gehört somit zum Stand der Technik. Hierbei ist eine Folie mit aufgedruckten Leiterbahnen mit einem Ende mit einer Leiterplatte und mit ihrem anderen Ende eine Schlaufe bildend mit Kontaktstellen der Welle verbunden.

Nachteilig wirkt sich hierbei aus, dass die von der Folie gebildete Schlaufe bei einer Auslenkung des Zeigers auf Grund des großen erforderlichen Verdrehwinkels des Zeigers und der Eigensteifigkeit der Folie bei einer Bewegungsumkehr des Zeigers jeweils überspringt. Dabei ergeben sich Drehmomentsprünge, die zu einer Ungenauigkeit der Anzeige führen. Außerdem ist der Verlauf des Rückstellmomentes bei einem solchen Zeigerinstrument die Anzeigegenauigkeit weiter verschlechternd ungleichmäßig. Der Zeigerantrieb muss deshalb ein hohes Antriebsmoment erzeugen, um die von der Folie erzeugten Drehmomente abfangen zu können und eine exakte Anzeige zu gewährleisten.

Diese vorgenannten, nachteiligen Effekte aufgrund der Federwirkung der Folie könnte man dadurch verringern, daß man die Folie möglichst lang und dünnwandig ausbildet. Das führt jedoch in der Praxis dazu, daß die Folie aufgrund ihrer geringen Formstabilität axial zur Zeigerwelle abgleitet und dadurch die Funktionsweise des Zeigerinstrumentes beeinträchtigt.

Der Erfindung liegt das Problem zugrunde, ein Zeigerinstrument der eingangs genannten Art so zu gestalten, daß das zur Auslenkung der Zeigerwelle erforderliche Antriebsmoment im Vergleich zu bekannten Zeigerinstrumenten wesentlich geringer ist. Gleichzeitig sollen Schwankungen des Rückstellmomentes weitgehend vermieden werden.

Dieses Problem wird erfindungsgemäß dadurch gelöst, daß die Folie spiralförmig auf die Zeigerwelle aufwickelbar ist und daß die Zeigerwelle eine sich im wesentlichen in radialer Richtung von der Zeigerwelle weg erstreckende flanschartige Erweiterung aufweist, gegen die die Folie mit einer ihrer Seitenkanten anlegbar ist und deren Außendurchmesser wenigstens genauso groß ist wie der Aufwickeldurchmesser der Folie.

Durch die flanschartige Erweiterung der Zeigerwelle wird ein axiales Abgleiten der Folie wirkungsvoll verhindert, indem die Erweiterung die Folie abstützt. Hierdurch ist es möglich, die Folie im Vergleich zu bekannten Zeigerinstrumenten erheblich dünner auszuführen, was mit einer Reduzierung der Rückstellkräfte verbunden ist. Das zum Antrieb der Zeigerwelle erforderliche Antriebsmoment ist somit erheblich verringert. Weiterhin läßt sich die Anzahl der für einen gleichmäßigen Verlauf des Widerstandsmomentes erforderlichen Umschlingungen reduzieren, so daß die Gesamtlänge der Folie und damit auch die Herstellungskosten niedriger sind.

Besonders günstig ist es, wenn die flanschartige Erweiterung eine nach außen hin abfallende Schrägfläche aufweist. Der Aufwickelvorgang während der Drehbewegung der Zeigerwelle kann durch diese nach Art einer Rampe ausgeführte Schrägfläche wesentliche vereinfacht werden. Die Toleranzen zwischen der Folie und der Erweiterung können gleichzeitig erhöht werden, ohne dabei ein ungleichmäßiges Auswickeln oder ein Abgleiten über den Rand der Erweiterung hinweg zu riskieren.

Besonders vorteilhaft ist es, wenn die Folie in einem von der Zeigerwelle entfernten Endbereich einen Abschnitt aufweist, in dem die Folie eine größere Dicke besitzt als in einem aufwickelbaren mittleren Bereich. Vorteilhaft ist zum Beispiel eine Dicke der Folie von in etwa 75 µm in ihrem mittleren, aufwickelbaren Bereich und von in etwa 300 µm in ihren Endbereichen, wodurch dort eine höhere mechanische Stabilität der Folie erreicht wird. Durch diese Aussteifung der Folie lässt sich eine Formstabilität in demjenigen Abschnitt erreichen, der bei der Drehbewegung der Zeigerwelle nicht aufgewickelt wird. Die Folie neigt daher auch außerhalb der durch die Erweiterung abgestützten Abschnitte nicht zum Durchhängen. Weitere Führungshilfen sind daher nicht erforderlich.

Wenn die Zeigerfahne gemäß einer vorteilhaften Weiterbildung der Erfindung ein beleuchtbarer Lichtleiter ist und von der Lichtquelle ausgesandtes Licht in die Zeigerfahne einkoppelbar ist, dann ist das Zeigerinstrument, insbesondere auch bei Dunkelheit, besonders gut ablesbar.

Es ist auch von Vorteil, wenn die Lichtquelle auf der Zeigerfahne angeordnet ist und von der Lichtquelle Licht in Richtung eines Betrachters abstrahlbar ist. Dabei kann die Zeigerfahne als einfacher Steg ausgebildet sein, auf den die Lichtquelle aufgesetzt ist. Um die Leuchtstärke zu erhöhen und die Erfaßbarkeit des Zeigers zu verbessern, können mehrere, in Längsrichtung der Zeigerfahne nebeneinander angeordnete Lichtquellen vorgesehen sein.

Ein besonders klar gegliedertes und übersichtliches Zeigerinstrument liegt vor, wenn gemäß einer anderen vorteilhaften Weiterbildung der Erfindung ein zumindest in Teilbereichen durchleuchtbares Zifferblatt vor der einem Betrachter zugewandten Seite des Zeigers angeordnet ist. Dabei ist der Zeiger aus der Sicht des Betrachters hinter dem Zifferblatt angeordnet, aber durch die durchleuchtbaren Teilbereiche des Zifferblattes wahrnehmbar. Die Wahrnehmbarkeit ist besonders gut, wenn der Zeiger mittels der Lichtquelle aktiv beleuchtet ist.

Eine besonders vorteilhafte Ausführungsform der Erfindung ist dann gegeben, wenn die flanschartige Erweiterung als Kreisscheibe ausgeführt ist. Durch eine solche rotationssymmetrische Ausführung der Erweiterung wird ein gleichmäßiges und damit für die leiterbahnbestückte Folie schonendes Aufwickeln gewährleistet. Die Störanfälligkeit des so ausgerüsteten Zeigerinstrumentes kann dadurch weiter reduziert werden.

Eine weitere, besonders vorteilhafte Ausführungsform der Erfindung ist dadurch gegeben, dass die Zeigerwelle zusätzlich zu der ersten Erweiterung eine zweite Erweiterung besitzt und dass die Folie zwischen den Erweiterungen angeordnet ist. Hierdurch lässt sich eine weiter verbesserte Führung erreichen, so dass auch unter dem Einfluss äußerer Kräfte, beispielsweise Fahrbewegungen, ein Abgleiten nach oben und das damit verbundene Anstoßen der Folie gegen andere Bauteile des Zeigerinstrumentes ausgeschlossen ist.

Dabei ist eine besonders günstige Weiterbildung der Erfindung gegeben, wenn die Lichtquelle eine auf die Folie aufkontaktierte Leuchtdiode ist. Durch eine solche bereits vormontierte Einheit, bestehend aus der Folie und dem als Leuchtdiode ausgeführten Leuchtmittel, ist der Aufwand zur Montage deutlich geringer. Kontaktierungsfehler bei der Montage sind dabei nahezu ausgeschlossen.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Figur 1: eine seitliche, teilweise geschnittene Darstellung eines erfindungsgemäßen Zeigerinstrumentes,
- Figur 2: einen Abschnitt einer Zeigerwelle eines weiteren erfindungsgemäßen Zeigerinstrumentes mit zwei Erweiterungen.

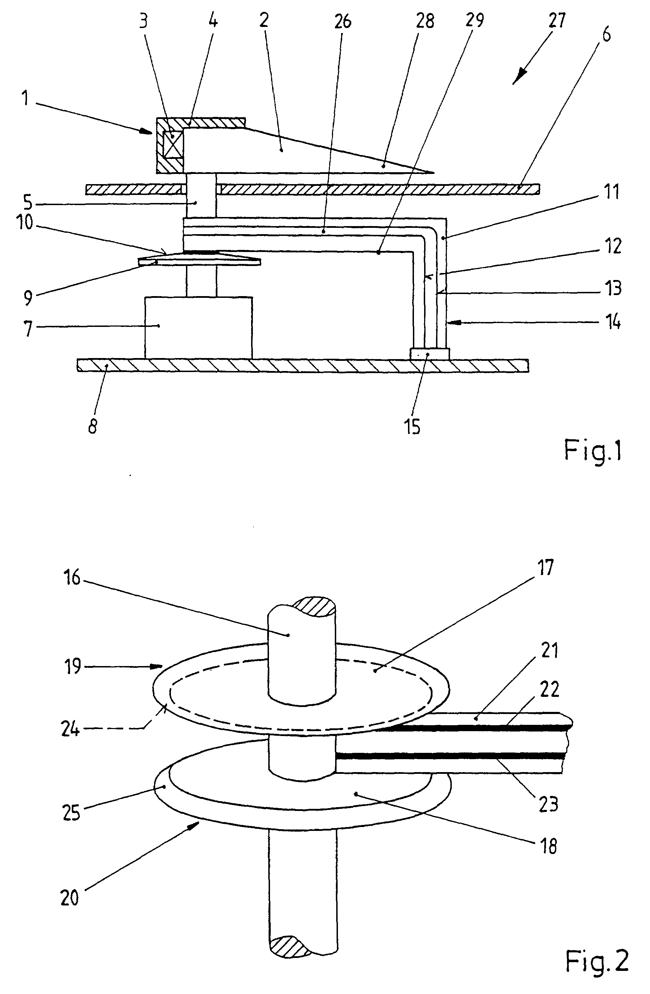

Figur 1 zeigt in einer vereinfachten Darstellung ein Zeigerinstrument 27 mit einem eine Zeigerfahne 2 aufweisenden Zeiger 1. In diese Zeigerfahne 2 strahlt eine als Leuchtdiode ausgeführte Lichtquelle 3 Licht ein, welche gegenüber einem möglichen Betrachter mit einer Kappe 4 abgedeckt ist. Die Zeigerfahne 2 ist an ihrem einer Zeigerspitze 28 gegenüberliegenden Ende an der Unterseite mit einer Zeigerwelle 5 verbunden, welche durch ein Zifferblatt 6 hindurchgeführt ist und mittels eines als Messwerk ausgeführten Zeigerantriebes 7 auslenkbar ist. Zwischen einer den Zeigerantrieb 7 tragenden Leiterplatte 8 und dem Zifferblatt 6 besitzt die Zeigerwelle 5 eine flanschartige Erweiterung 9, welche eine nach außen hin abfallende Schrägfläche 10 hat. Gegen die Erweiterung 9 liegt ein Abschnitt eines aufwickelbaren Bereiches 26 einer um die Zeigerwelle 5 spiralförmig herumgeführte Folie 11 mit einer unteren Seitenkante 29 an. Die mit zwei Leiterbahnen 12, 13 zur Verbindung der Lichtquelle 3 mit einer Energieversorgung versehene Folie 11 ist gegenüber der Zeigerwelle 5 in etwa rechtwinklig nach außen geführt und weist in ihrem der Zeigerwelle 5 abgewandten Endbereich einen verstärkt ausgeführten Abschnitt 14 auf, der nach unten geführt ist. Dieser verstärkte Abschnitt 14 hat eine Steckverbindung 15 mittels der die Folie 11 mit der die Stromversorgung bildende Leiterplatte 8 verbunden ist. Nicht dargestellt ist die in einer Ausnehmung der Zeigerwelle 5 verlaufende, einteilige Verbindung der Folie 11 mit dem Leuchtmittel 3.

Figur 2 zeigt in einer perspektivischen Darstellung einen Abschnitt einer Zeigerwelle 16 in einer gegenüber der in Figur 1 dargestellten Zeigerwelle abgewandelten Ausführung. Die Zeigerwelle 16 besitzt hierbei zwei spiegelbildlich angeordnete und jeweils als Kreisscheibe 17, 18 ausgeführte Erweiterungen 19, 20. Diese schließen eine ebenfalls nur abschnittsweise dargestellte Folie 21 mit zwei Leiterbahnen 22, 23 ein, die in der dargestellten Position vollständig abgewickelt ist. Ist die (hier nicht dargestellte) Lichtquelle zum Bei spiel eine Farbwechsel-Leuchtdiode, deren Farbe beispielsweise beim Erreichen eines Grenzwertes umgeschaltet wird, dann können auch mehr als zwei Leiterbahnen erforderlich sein. Die beiden Kreisscheiben 17, 18 besitzen zur besseren Führung der Folie 21 jeweils eine nach außen hin abfallende Schrägfläche 24, 25.

## Patentansprüche

1. Zeigerinstrument, insbesondere für ein Kraftfahrzeug, mit einem Zeiger (1) mit einer eine Zeigerfahne (2) auslenkenden Zeigerwelle (5, 16) und mit einer drehfest mit dem Zeiger (1) verbundenen Lichtquelle (3), wobei die Lichtquelle (3) mittels einer flexiblen, mit Leiterbahnen (12, 13; 22, 23) versehenen, spiralförmig auf die Zeigerwelle (5, 16) aufwickelbaren Folie (11, 21) mit einer Stromversorgung verbunden ist, **dadurch gekennzeichnet, dass** die Folie (11, 21) in zwei Abschnitte (14, 26) aufgeteilt ist, von denen der von der Zeigerwelle (5, 16) entfernte Abschnitt (14) durch eine größere Dicke gegenüber dem mittleren Abschnitt (26) verstärkt ist, dass der mittlere Abschnitt (26) auf die Zeigerwelle (5, 16) aufwickelbar ist und der verstärkte Abschnitt (14) mittels einer Steckverbindung (15) die Verbindung mit einer die Stromversorgung bildenden Leiterplatte (8) herstellt, und dass die Zeigerwelle (5, 16) unterhalb des aufwickelbaren Abschnittes (26) eine sich im Wesentlichen in radialer Richtung von der Zeigerwelle (5, 16) weg erstreckende flanschartige Erweiterung (9, 19, 20) aufweist, gegen die der aufwickelbare Abschnitt (26) mit seiner unteren Seiten kante (29) anlegbar ist und deren Außendurchmesser wenigstens genauso groß ist, wie der Aufwickeldurchmesser der Folie (11, 21) und die eine nach außen hin abfallen de Schrägfläche (10, 24, 25) aufweist.

2. Zeigerinstrument nach Anspruch 1, **dadurch gekennzeichnet, dass** die Zeigerfahne (2) ein beleuchtbarer Lichtleiter ist und dass von der Licht quelle (3) ausgesandtes Licht in die Zeigerfahne (2) einkoppelbar ist.

3. Zeigerinstrument nach Anspruch 1, **dadurch gekennzeichnet, dass** die Lichtquelle auf der Zeigerfahne angeordnet ist und dass von der Lichtquelle Licht in Richtung eines Betrachters abstrahlbar ist.

4. Zeigerinstrument nach einem der vorhergehenden Ansprüche, **dadurch gekennzeichnet, dass** ein zumindest in Teilbereichen durchleuchtbares Zifferblatt vor der einem Betrachter zugewandten Seite des Zeigers angeordnet ist.

5. Zeigerinstrument nach einem der vorhergehenden Ansprüche, **dadurch gekennzeichnet, dass** die flanschartige Erweiterung (9, 19, 20) als Kreisscheibe (17, 18) ausgeführt ist.

6. Zeigerinstrument nach einem der vorhergehenden Ansprüche, **dadurch gekennzeichnet , dass** die Zeigerwelle (5, 16) zusätzlich zu der ersten Erweiterung (19, 20) eine zweite Erweiterung (19, 20) besitzt und dass die Folie (21) zwischen den Erweiterungen (19, 20) angeordnet ist.

7. Zeigerinstrument nach einem der vorhergehenden Ansprüche, **dadurch gekennzeichnet , dass** die Lichtquelle (3) eine auf die Folie (11, 21) auf kontaktierte Leuchtdiode ist.

## Claims

1. Pointer-type instrument, in particular for a motor vehicle, having a pointer (1) with a pointer shaft (5, 16) that deflects a pointer vane (2) and having a light source (3) connected to the pointer (1) for rotation in common, the light source (3) being connected to a power supply by means of a flexible film (11, 21) which is provided with conductor tracks, (12, 13; 22, 23) and can be wound in a spiral onto the pointer shaft (5, 16), **characterized in that** the film (11, 21) is divided into two portions (14, 26), of which the portion (14) remote from the pointer shaft (5, 16) is thickened with respect to the central portion (26), **in that** the central portion (26) can be wound onto the pointer shaft (5, 16) and, by means of a plug-in connector (15), the thickened portion (14) produces the connection to a circuit board (8) which forms the power supply and **in that** the pointer shaft (5, 16) has underneath the portion (26) which can be wound up a flange-like enlargement (9, 19, 20), which extends in an essentially radial direction away from the pointer shaft (5, 16), against which the portion (26) which can be wound up can be placed by its lower lateral edge (29) and the outside diameter of which is at least as great as the wound-on diameter of the film (11, 21) and which has an oblique surface (10, 24, 25) which falls away outwards.

2. Pointer-type instrument according to Claim 1, **characterized in that** the pointer vane (2) is a light guide that can be illuminated, and **in that** light emitted by the light source (3) can be coupled into the pointer vane (2).

3. Pointer-type instrument according to Claim 1, **characterized in that** the light source is arranged on the pointer vane, and **in that** light can be emitted in the direction of a viewer by the light source.

4. Pointer-type instrument according to one of the preceding claims, **characterized in that** a dial, at least partial areas of which can be trans-illuminated, is arranged in front of that side of the pointer which faces a viewer.

5. Pointer-type instrument according to one of the preceding claims, **characterized in that** the flange-like enlargement (9, 19, 20) is embodied as a circular disc (17, 18).

6. Pointer-type instrument according to one of the preceding claims, **characterized in that**, in addition to the first enlargement (19, 20), the pointer shaft (5, 16) has a second enlargement (19, 20), and **in that** the film (21) is arranged between the enlargements (19, 20).

7. Pointer-type instrument according to one of the preceding claims, **characterized in that** the light source (3) is a light-emitting diode that is brought into contact with the film (11, 21).

## Revendications

1. Instrument à aiguille, notamment pour un véhicule a utomobile, avec une aiguille (1) comportant un arbre (5, 16) d'aiguille faisant dévier une palette d'aiguille (2) et une source lumineuse (3) fixée à l'aiguille (1) de telle sorte qu'elle ne puisse pas tourner par rapport à l'aiguille (1), la source de lumière (3) étant reliée, au moyen d'un ruban mince (11, 21) souple, supportant des pistes conductrices (12, 13; 22, 23) et pouvant s'enrouler en forme de spirale autour de l'arbre (5, 16) de l'aiguille, à une alimentation en courant, **caractérisé par le fait que** le ruban mince (11, 21) est divisé en deux sections (14, 26), dont la section (14), qui est éloignée de l'arbre (5, 16) de l'aiguille, est renforcée par une épaisseur plus importante par rapport à celle de la section moyenne (26), que la section moyenne (26) peut être enroulée sur l'arbre (5, 16) de l'aiguille et la section renforcée (14) établit, au moyen d'une liaison enfichable (15), la liaison avec une carte à circuits imprimés (8) formant l'alimentation en courant et que l'arbre (5, 16) de l'aiguille comporte, au-dessous de la section enroulable (26), une extension (9, 19, 20), qui s'étend en forme de flasque essentiellement en s'éloignant d e l'arbre de l'aiguille (5, 16) dans le sens radial, contre laquelle la section enroulable (26) s'applique par son arête latérale inférieure (29), dont le diamètre extérieur est, au moins, aussi important que le diamètre d'enroulement du ruban mince (11, 21) et qui comporte une surface oblique (10, 24, 25) inclinée vers l'extérieur.

2. Instrument à aiguille selon la revendication 1, **caractérisé par** le fait t que la palette (2) de l'aiguille est un guide d'ondes lumineuses pouvant être illuminé et que la lumière émise par la source lumineuse (3) peut être couplée dans la palette (2) de l'aiguille.

3. Instrument à aiguille selon la revendication 1, **caractérisé par le fait que** la source lumineuse est disposée sur la palette de l'aiguille et que de la lumière peut être émise par la source lumineuse dans la direction d'un observateur.

4. Instrument à aiguille selon l'une des revendications précédentes **caractérisé par le fait qu'**un cadran, pouvant être illuminé par transparence au moins dans des zones partielles, est disposé devant la face de l'aiguille tournée vers un observateur.

5. Instrument à aiguille selon l'une des revendications précédentes **caractérisé par le fait que** l'extension (9, 19, 20) en forme de flasque est conçue comme disque circulaire (17, 18).

6. Instrument à aiguille selon l'une des revendications précédentes **caractérisé par le fait que** l'arbre (5, 16) de l'aiguille a, en plus de la première extension (19, 20), une deuxième extension (19, 20) et que le ruban mince (21) est disposé entre les extensions (19, 20).

7. Instrument à aiguille selon l'une des revendications précédentes **caractérisé par le fait que** la source lumineuse (3) est une diode électroluminescente contactée sur le ruban mince (11, 21).
